(19) Europäisches Patentamt
European Patent Office
Office européen des brevets

(11) **EP 3 734 822 B1**

(12) **EUROPEAN PATENT SPECIFICATION**

(45) Date of publication and mention
of the grant of the patent:
**21.09.2022 Bulletin 2022/38**

(21) Application number: **19171648.9**

(22) Date of filing: **29.04.2019**

(51) International Patent Classification (IPC):
*H02M 3/28* $^{(2006.01)}$       *H02M 1/40* $^{(2007.01)}$
*H02M 3/335* $^{(2006.01)}$       *H02M 1/00* $^{(2006.01)}$

(52) Cooperative Patent Classification (CPC):
**H02M 3/28; H02M 1/40; H02M 3/33523;**
H02M 1/0025

(54) **METHODS AND APPARATUS FOR ACTIVE FLUX CONTROL OF AN OUTPUT TRANSFORMER
CONNECTED TO A POWER CONVERTER**

VERFAHREN UND VORRICHTUNG ZUR AKTIVEN FLUSSSTEUERUNG EINES MIT EINEM
STROMRICHTER VERBUNDENEN AUSGANGSTRANSFORMATORS

PROCÉDÉS ET APPAREIL DE COMMANDE DE FLUX ACTIF D'UN TRANSFORMATEUR DE
SORTIE CONNECTÉ À UN CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2020 Bulletin 2020/45**

(73) Proprietor: **GE Energy Power Conversion
Technology Ltd.
Warwickshire CV21 1BU (GB)**

(72) Inventor: **Bonilla Alarcon, Julian Eduardo
12277 Berlin (DE)**

(74) Representative: **Serjeants LLP
Dock
75 Exploration Drive
Leicester, LE4 5NU (GB)**

(56) References cited:
**JP-A- 2017 093 012     US-A1- 2013 265 805**

## Description

Technical Field

The present invention relates to active flux control of an output transformer connected to a power converter (e.g., a static frequency converter) in fault situations. The present invention is particularly useful in conventional single-phase alternating current (AC) electric rail networks.

Background Art

In a conventional electric rail network, the overhead line (sometimes called a "catenary") carries a single-phase alternating current (AC) rail network voltage with a fundamental frequency (e.g., 16.7, 25 or 50 Hz). The overline line is connected to a series of substations. Each substation may include a power converter with a direct current (DC) link that includes one or more capacitors. In particular, the overhead line may be connected to the AC terminals of a DC/AC output converter by means of an output transformer. The DC terminals of the output converter may be connected to the DC terminals of an AC/DC input converter by means of the DC link. The AC terminals of the input converter may be connected to a three-phase AC power network or utility grid operating at a fundamental frequency (e.g., 50 or 60 Hz) by means of an input transformer. The single-phase rail network voltage may therefore be derived from the three-phase grid voltage by means of the power converter.

JP 2017 093012 A discloses active flux control that includes current control by injecting a DC current component into the transformer. The DC current component is calculated from an estimate of the residual magnetic flux of the voltage transformer using an open-loop estimator comprising a system voltage input and a magnetic flux estimation unit.

US 2013/265805 A1 discloses a flux estimator to derive the transformer current $I_m$ from measured primary and secondary currents. The transformer current $I_m$ is considered to be an indirect measurement of the transformer flux and is utilised in a flux comparator. In particular, the transformer current $I_m$ is compared with a reference (or threshold) current $I_{max}$ that represents the current at which the transformer is considered as having reached saturation. The flux comparator is therefore used to detect if flux saturation has occurred. If flux saturation is detected, the polarity of the transformer flux is reversed.

The present invention aims to reduce the saturation of the output transformer during a fault in the electric rail network, e.g., in the overhead line, by actively controlling the flux in the output transformer.

In particular, the rail network voltage may sometimes experience a voltage dip either because of a network fault or during testing of protection systems for the electric rail network. Abrupt voltage disruption may saturate the output transformer and other inductive elements in the electric rail network, which may lead in turn to non-linear behaviour of the output transformer. Non-linear behaviour affects the network resonance frequencies such that, during the fault, oscillations at non-fundamental frequencies appear in the network voltage and network current. This may significantly affect the proper operation of the protection systems for the electric rail network. Protection systems typically use voltage and current measurements to determine the exact location of the fault so that the faulty network section may be isolated. But it may be difficult for the protection systems to make the correct determination unless the voltage and current measurements have sinusoidal waveforms at the fundamental frequency. Distorted waveforms caused by the non-linear behaviour of the output transformer may therefore lead to the incorrect isolation of network sections and to delays in restoring power to the electric rail network after the fault.

In light of the above, there is a need for an improved method of active flux control suitable for electric rail networks and an apparatus for implementing any such method.

Summary of the invention

The invention is defined by a method according to claim 1 and by an apparatus according to claim 12. Advantageous aspects of the invention are defined in the dependent claims.

The method of the present invention is advantageous in that it may provide improved flux control by controlling the power converter during network faults to inject a DC current component into the output transformer. In particular, the method may quickly reduce the saturation of the output transformer during a network fault. The method of the present invention is of particular use with an output transformer connected to a static frequency converter of an electric rail network that is supplied from a three-phase alternating current (AC) supply with a first fundamental frequency and where the electric rail network operates with a single-phase AC with a second fundamental frequency.

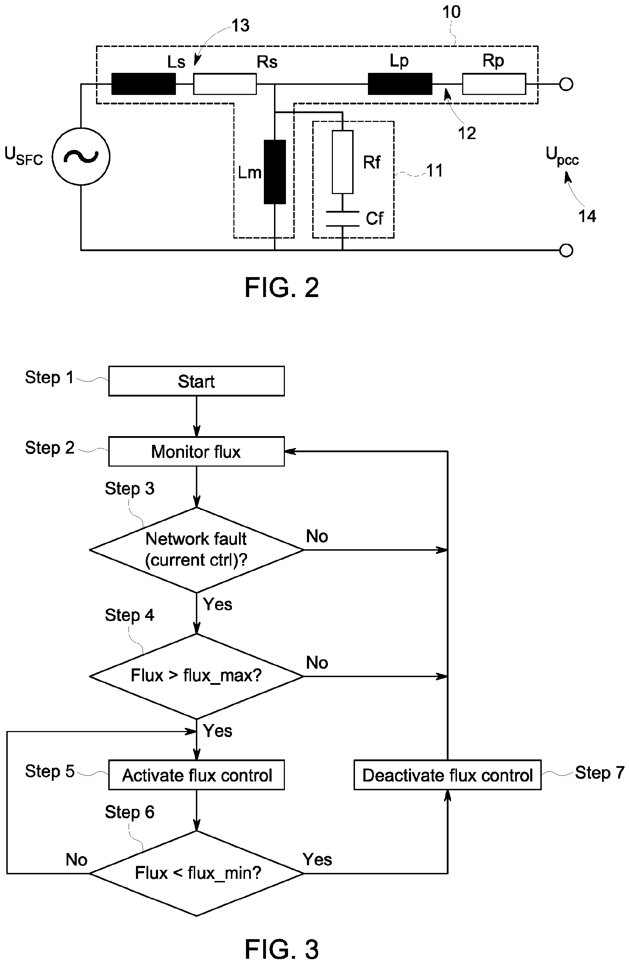

The method may include the step of obtaining a measure of one or more of a primary current, a secondary current, a filter current, and a converter voltage of the output transformer, which can be used by the closed-loop estimator to derive the estimated magnetisation flux of the output transformer. The values of the primary current, the secondary current, the filter current, and the converter voltage of the output transformer may be obtained in any manner apparent to the skilled person. The values may be measured directly or indirectly or may be estimated using known methods. The primary current is the current in the primary coil of the output transformer. The secondary current is the current in the secondary coil of the output transformer. The filter current and converter voltage may be understood with reference to Figure 2, which shows a simplified schematic of an output transformer of a static frequency converter and is discussed below.

The estimated magnetisation flux of the output transformer is derived by a closed-loop estimator that comprises both the flux model and a modelled magnetisation curve that can be used to derive the modelled magnetisation flux. A closed-loop estimator is advantageous over an open-loop estimator comprising only a flux model as it has a reduced steady state error.

The flux model of a closed-loop estimator may comprise any suitable dynamic model that provides an estimate of the magnetisation flux of the output transformer. For example, the flux model may comprise an open-loop estimator that will be known to the skilled person with an additional input derived from the difference between an output of the flux model and the modelled magnetisation flux. The flux model inputs may be the measured secondary current $i_s$, the measured converter voltage $u_s$, and a feedback input $\Delta\Phi_m$ derived from the difference between an output of the flux model (i.e., the estimated magnetisation flux $\hat{\Phi}_m$) and the modelled magnetisation flux $\Phi_m$.

If the secondary current $i_s$ and converter voltage $u_s$ are known, an open-loop estimator may estimate the magnetisation flux $\hat{\Phi}_m$ of the output transformer from the following equation:

$$u_s = L_s \frac{di_s}{dt} + R_s i_s + \frac{d\hat{\Phi}_m}{dt}$$

where $L_s$ is the secondary inductance of the output transformer and $R_s$ is the secondary resistance of the output transformer.

As $u_s$ and $i_s$ are both known, the observer state is defined as:

$$x = L_s i_s + \hat{\Phi}_m$$

The observer state equation and output equations are:

$$\frac{dx}{dt} = u_s - R_s i_s$$

$$\hat{\Phi}_m = x - L_s i_s$$

The modelled magnetisation flux $\Phi_m$ provides an output that is an open-loop estimate of the magnetisation flux. This output may be obtained in any manner apparent to the skilled person. For example, in one arrangement, the modelled magnetisation flux $\Phi_m$ may be obtained from a magnetisation curve specifically adapted to the output transformer and an estimate of a magnetisation current of the output transformer.

The magnetisation current $i_m$ of the output transformer may be estimated from the obtained values of the primary current $i_p$, secondary current $i_s$, and filter current $i_f$ of the output transformer as follows:

$$i_m = i_s - i_p - i_f$$

The magnetisation curve of the output transformer may be obtained from measurements or derived from a suitable model. The magnetisation curve provides a function $f_{sat}$ for estimating the magnetisation flux $\Phi_m$ from the estimated magnetisation current $i_m$:

$$\Phi_m = f_{sat}(i_m)$$

As will be readily understood by the skilled person, there are several well-known methods by which the DC component of the estimated magnetisation flux $\hat{\Phi}_m$ may be estimated. All such methods are inherently suitable for use with the method of the present invention. In one arrangement, the DC component of the estimated magnetisation flux (i.e., $\hat{\Phi}_{dc}$) is estimated using a moving average filter (or MAF) over N samples of the form:

$$\hat{\Phi}_{dc}(t) = \frac{1}{T} \int_0^T \hat{\Phi}_m(t - \tau) d\tau$$

This equation is cast in a discrete-time recursive form for implementation in the method of the present invention.

Alternative methods by which the DC component of the estimated magnetisation flux may be estimated include, but are not limited to, a low pass filter wherein the cut-off frequency of the filter is much smaller than the frequency of the rail network voltage or a notch filter at the frequency of the rail network voltage wherein the output of the notch filter is subtracted from the total estimated magnetisation flux, for example.

In order to avoid constant operation of the active flux control method, and the resulting constant injection of a DC current component into the output transformer, it may be preferable that the method further comprises an activation function that activates the injection the DC current component into the output transformer when the DC component of the estimated magnetisation flux rises above a first threshold value, and that subsequently deactivates the flux controller when the DC component of the estimated magnetisation flux drops below a second threshold value. The second threshold value is lower than the first threshold value. In other words, the method may comprise an activation function that controls the method so that whilst the DC component of the estimated magnetisation flux remains below a first limit value no DC current component is injected into the output transformer.

When the DC component of the estimated magnetisation flux rises above the first threshold value, the method of the present invention may activate the flux controller to inject a DC current component into the output transformer. The injection of the DC current compound into the output transformer will preferably continue until the DC component of the estimated magnetisation flux drops below the second threshold value as a result of the active flux control. After the DC component of the estimated magnetisation flux drops below the second threshold value the flux controller may be deactivated and is not reactivated unless and until the DC component of the estimated magnetisation flux rises back above the first threshold value.

An activation function may be of the form:

$$\Phi_{\text{CTRL}_{ON}} = \begin{cases} 1, \text{if } \widehat{\Phi}_{dc} > x_1 \\ 0, \text{if } \widehat{\Phi}_{dc} \leq x_2 \end{cases}$$

where $x_1$ is the first threshold value and $x_2$ is the second threshold value, with $x_1$ greater than $x_2$. The first threshold value and the second threshold value may be set at any appropriate values. The first threshold value may be between 20% and 90% saturation of the output transformer. The second threshold value may be between 10% and 80% of the saturation of the output transformer. In order to ensure good operation of the active flux control method, it is preferable that the second threshold value is less than the first threshold value by at least 5% of the saturation of the output transformer.

In one arrangement, the first threshold value is 50% of the saturation of the output transformer and the second threshold value is 40% of the saturation of the output transformer so that:

$$\Phi_{\text{CTRL}_{ON}} = \begin{cases} 1, \text{if } \widehat{\Phi}_{dc} > 0.5 \text{ p. u.} \\ 0, \text{if } \widehat{\Phi}_{dc} \leq 0.4 \text{ p. u.} \end{cases}$$

In an alternative arrangement, the first threshold value is 60% of the saturation of the output transformer and the second threshold value is 50% of the saturation of the output transformer so that:

$$\Phi_{\text{CTRL}_{ON}} = \begin{cases} 1, \text{if } \widehat{\Phi}_{dc} > 0.6 \text{ p. u.} \\ 0, \text{if } \widehat{\Phi}_{dc} \leq 0.5 \text{ p. u.} \end{cases}$$

The current control may be carried out by:

calculating a corrective current from the DC component of the estimated magnetisation flux (e.g., that represents a DC current component to be injected into the output transformer);
providing a reference current (e.g., that represents a sinusoidal current component to be injected into the output transformer); and

calculating the total current to be injected into the output transformer from the corrective current and the reference current.

In order to provide the most appropriate current injection into the output transformer it may be advantageous that the method further comprises the step of using a tunable controller to control the magnitude and/or duration of the DC current component that is injected into the output transformer. The tunable controller may act on the DC component of the estimated magnetisation flux and the output of the tunable controller may be the corrective current.

If the DC component of the estimated magnetisation flux is estimated using a MAF, the tunable controller may be a simple proportional control. This is possible as in a MAF there is an integral action from the converter voltage to the estimated magnetisation flux. A tunable controller that is a simple proportional controller may be represented by:

$$\Delta i_s = -K_{\Phi}^* \widehat{\Phi}_{dc}$$

where $\Delta i_s$ is the corrective current and $K_{\Phi}^*$ is the gain of the tunable controller.

This is possible because the MAF is integrating the flux over a time period T and, as a result, there is an integral part for the control provided by the MAF. Further, there is no derivative action from the converter voltage to the output transformer magnetisation flux. This allows a simple proportional control, of the type set out above, to guarantee zero steady state error when tracking fixed set points in the DC component of the estimated magnetisation flux $\widehat{\Phi}_{dc}$.

As will be readily understood, if a different method is used to estimate the DC component of the estimated magnetisation flux, a different tunable controller may be appropriate. With some such methods a simple proportional control may still be appropriate. It is anticipated that the skilled person will be able to determine a suitable tunable controller without difficulty.

The method uses the DC component of the estimated magnetisation flux to calculate the DC current component that is to be injected into the output transformer to control the flux in the output transformer during a fault situation. This may be done in any manner apparent to the skilled person.

In known methods of current control (i.e., according to the prior art) a reference current is used to calculate a reference voltage that can be used to control the power converter.

Such known methods of current control typically calculate the reference voltage $u_s^*$ as follows:

$$u_s^* = F(i_s, i_s^*)$$

where $i_s$ is the measured secondary current and $i_s^*$ is the desired secondary reference current during a short-circuit and that represents a sinusoidal current component.

Such known methods of current control therefore inject current into the output transformer on the basis of a sinusoidal current component only. In the method of the present invention, an additional DC current component may be injected into the output transformer during a short-circuit. In order to do this, the desired secondary reference current during a short-circuit $i_s^*$ may be modified on the basis of the corrective current which is calculated from the DC component of the estimated magnetisation flux. For example:

$$i_s^* = i_{s\_ref}^* + \frac{1}{K_F}\Delta i_s = i_{s\_ref}^* - K_\Phi \widehat{\Phi}_{dc}$$

where $K_F$ is the steady state gain of the current controller, $i_{s\_ref}^*$ is a secondary reference current that represents the sinusoidal current component and:

$$-K_\Phi \widehat{\Phi}_{dc} = -\frac{K_\Phi^*}{K_F}\widehat{\Phi}_{dc}$$

which corresponds to the desired DC component in the converter current.

The active flux control method is suitable for use with the output transformer connected to any power converter. However, the method is particularly suitable for use with static frequency converters that form part of an electric rail network, as described above. The present invention also provides a controller adapted to control a power converter (e.g., a static frequency converter) to inject a DC current component into an output transformer according to the active flux control method described above.

The present invention also provides an electric circuit including an output transformer connected to a power converter (e.g., a static frequency converter) and a controller, the controller being adapted to:

derive an estimated magnetisation flux of the output transformer using a closed-loop estimator comprising a flux model and a modelled magnetisation flux; calculate a DC component of the estimated magnetisation flux; and control the power converter to inject a DC current component into the output transformer, wherein the DC current component is calculated from the DC component of the estimated magnetisation flux.

The controller may include a flux controller (e.g., to derive the estimated magnetisation flux and to calculate the DC component of the estimated magnetisation flux) and a current controller (e.g., to control the power converter to inject the DC current component into the output transformer).

The output transformer and the power converter may form part of a substation for an electric rail network where the output transformer is connected to an overhead line.

Drawings

Figure 1 is a graph showing the voltage behaviour in an electric railway network during a short-circuit without the active flux control of the present invention;
Figure 2 is simplified schematic of a static frequency converter output stage;
Figure 3 is a schematic of the operation of an embodiment of the method of the present invention to control flux in a static frequency converter;
Figure 4 is a block diagram of an active flux controller operating according to an embodiment of the method of the present invention;
Figure 5 is a graph showing the voltage behaviour in an electric railway network during a short-circuit using the active flux control of the present invention; and
Figure 6 is a graph showing the DC component of flux in the output transformer during the events of Figures 1 and 5.

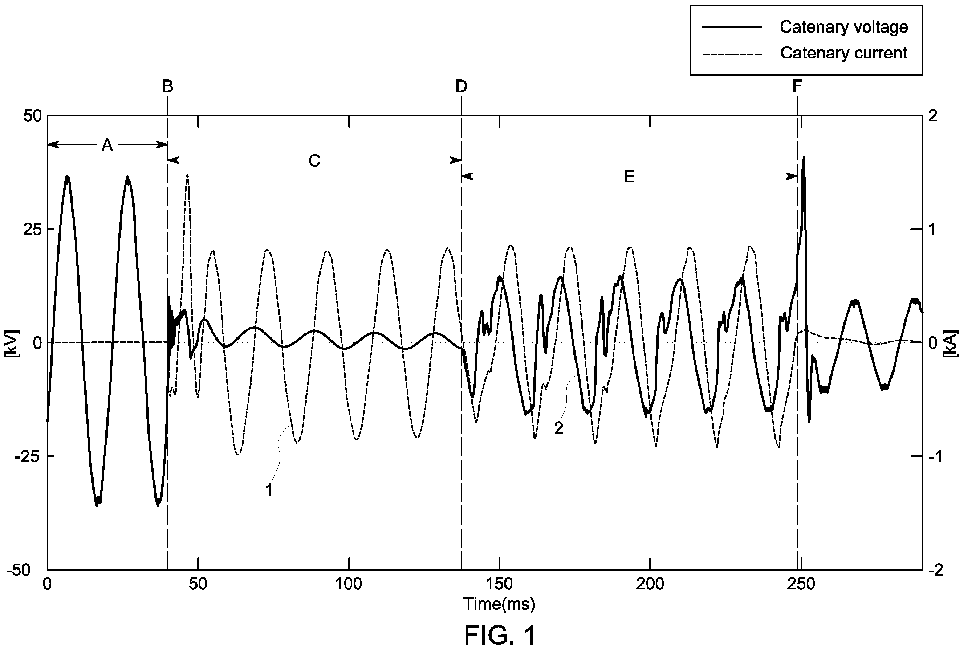

Figure 1 illustrates the voltage oscillation of a 25kV - 50Hz electric railway network during a short-circuit test. The overhead line (or "catenary") of the electric rail network is fed by a static frequency converter (SFC) and the output of the SFC is actively controlled by a current controller according to the prior art that acts to limit the fault current during fault situations.

Initially, during time period A, the network operates with a normal catenary voltage (indicated by solid line 2) and frequency and a zero catenary current (indicated by dashed line 1). At time B a short-circuit occurs, after which, during time period C, the voltage amplitude drops significantly, and the current becomes non-zero and oscillates. At time D, a section of the network is isolated. After which, during time period E, the voltage and current exhibit distortions and oscillations at non-fundamental frequencies. These distortions have negative effects on the operation of protection relays in the electric railway network by introducing multiple zero-crossing events per fundamental cycle. Since protection relays assume sinusoidal waveforms at the fundamental frequency to calculate the exact location of the fault, the distorted waveforms create mis-calculations and wrong isolation of network sections leading to delays in the restoration of the power after a fault. At time F, the fault is cleared.

The appearance of oscillation after the change of impedance during a network fault may be traced to the initial event where the fault occurs. This may be understood with reference to Figure 2, which shows a simplified schematic of an output stage of an SFC for an electric rail network. The output stage comprises a transformer 10 and a filter 11. Although not shown, the SFC and transformer 10 form part of a substation.

The transformer 10 has a primary coil 12 with an inductance $L_p$ and a resistance $R_p$. The transformer 10 also a secondary coil 13 with an inductance $L_s$ and a resistance $R_s$. The filter 11 has resistance $R_f$ and a capacitance Cf. The SFC behaves as a voltage source $U_{sfc}$ and delivers a voltage $U_{pcc}$ at a point of common coupling 14. The transformer 10 has a magnetisation inductance $L_m$.

During a short circuit, a voltage at the point of common coupling 14 collapses due to the low impedance of the short circuit. This exposes the transformer 10 to a high voltage variation and the magnetisation flux through the transformer 10 is disrupted. This sudden change generates an aperiodic component (DC component) in the magnetisation flux that may create saturation depending on the instant where the short circuit occurs.

Since the magnetisation flux $\Phi_m$ is proportional to the magnetisation current $I_m$, the flux lags 90° with respect to the voltage at the point of common coupling.

During normal operation, the magnetisation flux $\Phi_m$ through the transformer 10 is periodic and its DC component is zero:

$$u = U\cos(\omega t)$$

and

$$\Phi_m = \frac{U}{\omega}\cos\left(\omega t + \frac{\pi}{2}\right) + 0_{dc}$$

At zero crossing of the transformer terminal voltage, the instantaneous value of the magnetisation flux is at its maximum due to the 90° phase lag. If the short circuit appears at that point, the magnetisation flux is hold close to the maximum, generating an aperiodic component (DC component):

$$\Phi_m = \frac{U}{\omega}\cos\left(\omega t + \frac{\pi}{2}\right) + \Phi_{dc}$$

Under this situation, the magnetisation flux oscillates around the DC level (i.e., $\Phi_{dc}$) with a peak value proportional to the network voltage. However, since the voltage on the network is small, due to the low impedance of the short circuit/fault, the maximum flux excursion (AC plus DC components) mildly saturates the output transformer 10 (magnetisation inductance does not change drastically) and no resonances are noticed. This may be seen in Figure 1 during time C where a small catenary voltage appears without distortion.

The situation changes when the impedance during a fault is higher, e.g., a long-distance short circuit or a change of distance to the fault due to the network protection. Due to the increased voltage, the flux, which is already high due to the aperiodic component, goes over the saturation limit. Heavy saturation reduces the magnetisation inductance $L_m$ of the output transformer 10 and generates a different resonance frequency. The effect is periodic since it coincides with maximum values of magnetisation flux (minimum magnetisation inductance) and decays with the aperiodic component of the magnetisation flux. The rate at which the aperiodic component in the flux decays is linked to the value of the network short circuit impedance.

A schematic of the operation of the method of the present invention to control flux in the output transformer is shown in Figure 3. When the method is started (step 1) and in operation, the DC component of the estimated magnetisation flux $\hat{\Phi}_{dc}$ in the output transformer 10 connected to the SFC is monitored (step 2). The SFC and the electric rail network are monitored for network faults (step 3). If no network fault is detected, the method continues to monitor flux (step 2) and no action is taken.

When a network fault is detected, the DC component of the estimated magnetisation flux in the output transformer 10 is compared with an activation (first) threshold value (step 4) and the flux control is activated if the DC component of the estimated magnetisation flux is greater than the activation threshold value (step 5). If the DC component of the estimated magnetisation flux is less than the activation threshold value, the flux control is not activated, and the method simply continues to monitor the DC component (step 2). If the DC component of the estimated magnetisation flux is greater than the activation threshold value, the flux control is activated to inject an appropriate DC current component into the output transformer whilst the DC component of the estimated magnetisation flux in the output transformer continues to be monitored. The flux control continues to inject an appropriate DC current component into the output transformer until the DC component of the estimated magnetisation flux in the output transformer 10 drops below a deactivation (second) threshold value (step 6). The deactivation threshold value is lower than the activation threshold value. Once the DC component of the estimated magnetisation flux drops below the deactivation threshold value, the flux control is deactivated (step 7) and the injection of the DC current component into the output transformer 10 is halted.

In this particular arrangement, the activation threshold value of the DC component of the estimated magnetisation flux in the output transformer 10 is 0.6 p.u. (60% saturation) and the deactivation threshold value of the DC component of the estimated magnetisation flux in the output transformer is 0.5 p.u. (50% saturation). This gives an activation and deactivation function of the active flux control as:

$$\Phi_{CTRL_{ON}} = \begin{cases} 1, \text{if } \widehat{\Phi}_{dc} > 0.6 \text{ p. u.} \\ 0, \text{if } \widehat{\Phi}_{dc} \leq 0.5 \text{ p. u.} \end{cases}$$

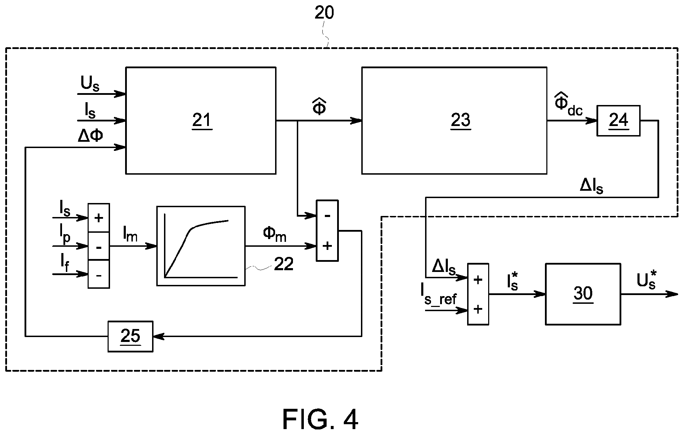

Figure 4 is a block diagram of a controller that can be used to carry out the active flux control when required. The controller includes an active flux controller 20 and a current controller 30.

The active flux controller 20 incudes a flux model 21, a transformer saturation curve 22, a moving average filter 23, and a tunable gain controller 24. The active flux controller 20 has inputs of:

secondary voltage of the output transformer ($U_s$)
secondary current of the output transformer ($I_s$)
primary current of the output transformer ($I_p$)
filter current of the output transformer ($I_f$)

The output of the active flux controller 20 is a secondary corrective current $\Delta I_s$ that represents a DC current component to be applied to the output transformer 10 during the short-circuit fault as described in more detail below. This secondary corrective current $\Delta I_s$ is added to a secondary reference current $I_{s\_ref}$ that represents a sinusoidal current component to derive a desired secondary reference current $I_s^*$ during a fault situation. The current controller 30 uses the desired secondary reference current $I_s^*$ to derive a secondary reference voltage $U_s^*$ to control the current that is injected into the output transformer 10 by the SFC during the fault situation.

Together the flux model 21 and the transformer saturation curve 22 form a closed-loop estimator for deriving an estimated magnetisation flux $\widehat{\Phi}_m$ of the output transformer 10.

The flux model 21 is based on an open-loop flux model that estimates the magnetisation flux $\widehat{\Phi}_m$ from inputs $U_s$ and $I_s$ but with an additional feedback input $\Delta\Phi_m$ that is derived from the outputs of the flux model 21 and the transformer saturation curve 22 as explained below.

The transformer saturation curve 22 is specifically adapted to the output transformer 10 and has inputs of the measured primary current $I_p$, secondary current $I_s$, and filter current $I_f$ of the output transformer 10. These inputs are used to estimate a magnetisation current $I_m$ of the output transformer according to:

$$I_m = I_s - I_p - I_f$$

The transformer saturation curve 22 provides a function $f_{sat}$ for estimating the magnetisation flux $\Phi_m$ from the estimated magnetisation current $I_m$ where:

$$\Phi_m = f_{sat}(I_m)$$

The estimated flux $\widehat{\Phi}_m$ from the flux model 21 is subtracted from the estimated magnetisation flux $\Phi_m$ derived using the transformer saturation curve 22 and the resulting difference is multiplied by an observer gain 25 (e.g., $K_{obsv}$) to produce the feedback input $\Delta\Phi$ to the flux model 21. The observer gain 25 corrects for potential errors in the estimated magnetisation flux $\Phi_m$ that may arise from errors in the model used for estimation.

The flux model 21 calculates an estimate of the magnetisation flux $\widehat{\Phi}_m$ from the following equations:

$$U_s = L_s \frac{dI_s}{dt} + R_s I_s + \frac{d\widehat{\Phi}_m}{dt}$$

where $L_s$ is the secondary inductance of the output transformer 10 and $R_s$ is the secondary resistance of the output transformer.

An observer state is defined as:

$$x = L_s I_s + \widehat{\Phi}_m$$

In an open-loop estimator the observer state equation is:

$$\frac{dx}{dt} = U_s - R_s I_s$$

In the closed-loop estimator, this equation is modified by the feedback input $\Delta\Phi$ to provide the closed-loop observer state equation:

$$\frac{dx}{dt} = U_s - R_s I_s + K_{obsv}(\Phi_m - \widehat{\Phi})$$

This gives an estimate of magnetisation flux $\widehat{\Phi}$ by the flux model 21 as:

$$\widehat{\Phi} = x - L_s I_s$$

As well as being used to derive the feedback input, the estimated magnetisation flux $\widehat{\Phi}$ from the flux model 21 is also input into the moving average filter 23. The moving average filter 23 calculates a DC component of the estimated magnetic flux over N samples:

$$\widehat{\Phi}_{dc}(t) = \frac{1}{T}\int_0^T \widehat{\Phi}(t-\tau)d\tau$$

This equation is cast in a discrete-time recursive form for implementation. The output of the moving average filter 23 is the DC component of the estimated magnetisation flux $\widehat{\Phi}_{dc}$.

A simple proportional controller i.e., a tunable gain controller 24, is used to guarantee zero steady-state error when tracking fixed set points in the DC component of the estimated magnetic flux $\widehat{\Phi}_{dc}$. Hence the secondary corrective current $\Delta I_s$ produced by the flux controller 20 is calculated using the tunable gain controller 24 as follows:

$$\Delta I_s = -K_\Phi^* \widehat{\Phi}_{dc}$$

wherein, $K_\Phi^*$ is the gain of the tunable gain controller 24.

The secondary corrective current $\Delta I_s$ output by the active flux controller 20 will act to reduce the DC component of the magnetisation flux in the output transformer 10 and is added to the secondary reference current $I_{s\_ref}^*$ that represents the sinusoidal current component. In particular:

$$I_s^* = I_{s\_ref}^* + \frac{1}{K_F}\Delta I_s = I_{s\_ref}^* - K_\Phi \widehat{\Phi}_{dc}$$

where $K_F$ is the steady state gain of the current controller 30 and:

$$-K_\Phi \widehat{\Phi}_{dc} = -\frac{K_\Phi^*}{K_F}\widehat{\Phi}_{dc}$$

which corresponds to the desired DC component in the converter current.

The secondary reference current $I_s^*$ is provided as an input to the current controller 30 which derives a secondary reference voltage $U_s^*$ as follows:

$$U_s^* = F(I_s, I_s^*)$$

where $I_s$ is the measured secondary current in the output transformer 10.

When the active flux controller 20 is operating, the secondary reference voltage $U_s^*$ will control the SFC to inject current into the output transformer 10 that includes both a DC current component and a sinusoidal current component. When the flux controller 20 is not operating, the secondary reference voltage $U_s^*$ can be derived using a secondary reference current that does not includes a DC current component but only a sinusoidal current component (e.g., using just $I_{s\_ref}^*$).

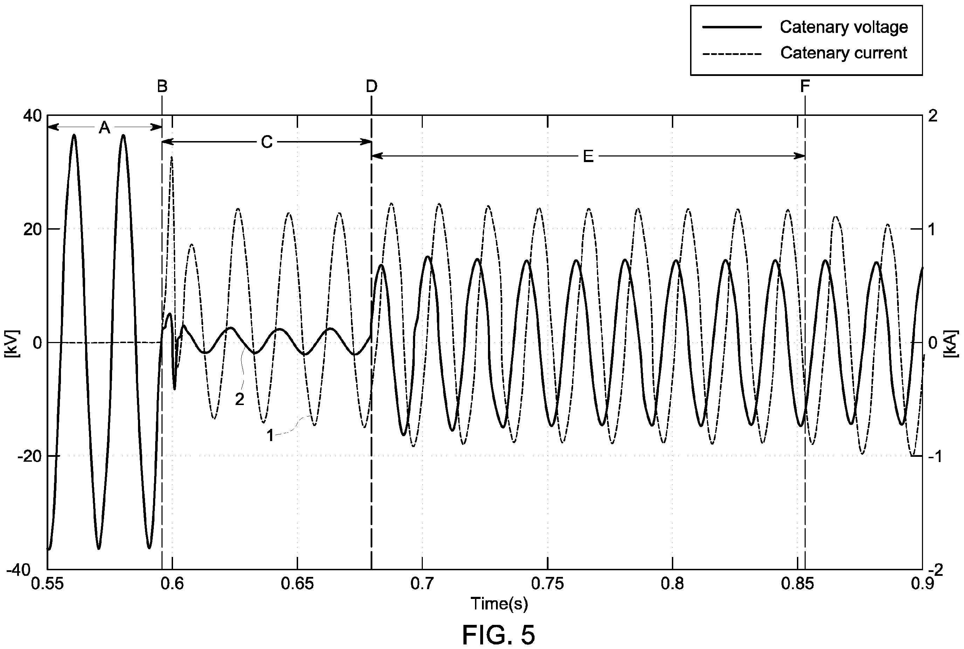

As set out above, the active flux control method of the present invention acts to inject a current into the output transformer 10 connected to an SFC of an electric rail network to control an aperiodic component of the magnetisation flux during a fault situation. The simulated application of the active flux control method is shown in Figure 5.

Figure 5 illustrates the voltage oscillation of a 25kV - 50Hz electric railway network during the same short-circuit test illustrated in Figure 1, with the addition of the active flux method of the present invention described above. That is, the overhead line of the electric railway network is fed by the SFC and the output of the SFC is actively controlled by the current controller 30 in combination with the flux controller 20 during a fault situation.

Initially, during time period A, the network operates with a normal catenary voltage (indicated by solid line 2) and frequency and a zero catenary current (indicated by dashed line 1). At time B, a short-circuit occurs, after which, during time period C, the voltage amplitude drops significantly, and the current becomes non-zero and oscillates. At time D, the network section is isolated. After which, during time period E, the aperiodic component of the magnetisation flux is controlled by the method of the present invention to reduce the distortions and oscillations at non-fundamental frequencies shown in Figure 1. At time F, the flux control of the method of the present invention is turned off.

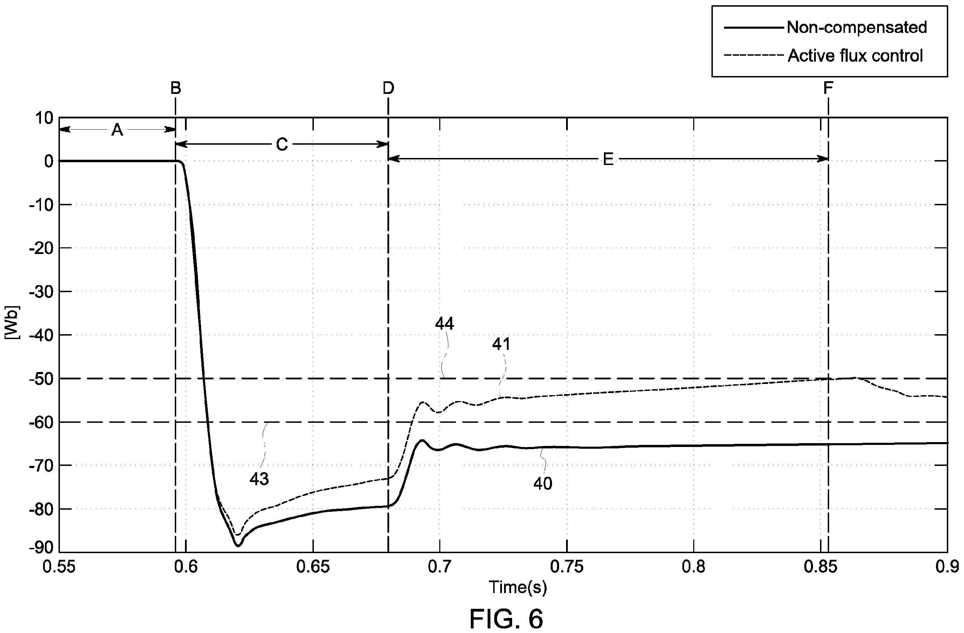

Figure 6 shows a comparison of the aperiodic (DC) component of the magnetisation flux in the output transformer 10 during the events shown in Figures 1 and 5. The DC component of the magnetisation flux of Figure 1 is indicated by solid line 40 and the DC component of the magnetisation flux of Figure 5 is indicated by dotted line 41. This shows that actively injecting a DC current component into the output transformer 10 acts to reduce the saturation level in the output transformer.

Figure 6 also shows the activation threshold 43 and deactivation threshold 44 for the active flux control of the present invention. The active flux control is activated after time B when the magnitude of the DC component of the magnetisation flux in the output transformer 10 exceeds the activation threshold 43. The active flux control remains activated until the magnitude of the DC component of the magnetisation flux in the output transformer 10 drops to the deactivation threshold 44. The activation threshold 43 is 0.6 p.u. and the deactivation threshold 44 is 0.5 p.u.

It is to be understood that the above description of a specific arrangement of the invention is illustrative only and is not intended to be limiting. Unless otherwise indicated by context any individual feature of the specific arrangement may be included in an arrangement of the invention independently of any other feature.

**Claims**

1. A method of active flux control for an output stage of a power converter for an electric rail network, the output stage comprising a transformer (10) connected to the power converter, the method comprising the steps of:

   deriving an estimated magnetisation flux ($\hat{\Phi}$) of the transformer (10) using a closed-loop estimator comprising:

   a modelled magnetisation flux (22), wherein the output of the modelled magnetisation flux (22) is an open-loop estimate of the magnetisation flux ($\Phi_m$) of the transformer (10) obtained from a magnetisation curve adapted to the transformer (10) and an estimate of a magnetisation current ($I_m$) of the transformer (10), and
   a flux model (21) comprising a dynamic model of the magnetisation flux of the transformer (10), wherein the output of the flux model (21) is the estimated magnetisation flux ($\hat{\Phi}$) of the transformer (10) and wherein the inputs of the flux model (21) are a measured secondary current ($I_s$), a measured converter voltage ($U_s$), and an input derived ($\Delta\Phi$) from the difference between the output of the flux model (21) and the output of the modelled magnetisation flux (22);

   calculating a direct current DC component of the estimated magnetisation flux ($\hat{\Phi}_{dc}$) of the transformer (10); and
   carrying out current control by injecting a DC current component into the transformer (10), wherein the DC current component is calculated from the DC component of the estimated magnetisation flux ($\hat{\Phi}_{dc}$) of the transformer (10).

2. A method according to claim 1, wherein the output stage further comprises a filter (11) and the estimate of the magnetisation current ($I_m$) is calculated from a measured primary current ($I_p$), a secondary current ($I_s$), and a filter current ($I_f$).

3. A method according to any preceding claim, wherein the DC component of the estimated magnetisation flux ($\hat{\Phi}_{dc}$) is estimated using a moving average filter (23) over N samples.

4. A method according to any preceding claim, further comprising using an activation function that activates the current control when the DC component of the estimated magnetisation flux ($\hat{\Phi}_{dc}$) is above a first threshold value and subsequently deactivates the current control when the DC component of the estimated magnetisation flux ($\hat{\Phi}_{dc}$) is equal to or below a second threshold value, wherein the second threshold value is lower than the first threshold value.

5. A method according to claim 4, wherein the first threshold value is between 20% saturation and 90% saturation of the transformer (10).

6. A method according to claim 4 or claim 5, wherein the second threshold value is between 10% saturation and 80% saturation of the transformer (10).

7. A method according to any of claims 4 to 6, wherein the first threshold value is greater than the second threshold value by at least 5% of the saturation of the transformer (10).

8. A method according to claim 4, wherein the first threshold value is 50% saturation of the transformer (10) and the second threshold value is 40% saturation of the transformer (10); or
   wherein the first threshold value is 60% saturation of the transformer (10) and the second threshold value if 50% saturation of the transformer (10).

9. A method according to any preceding claim, further comprising using a tunable controller (24) to control the magnitude and/or duration of the DC current component, said tunable controller (24) acting on the DC component of the estimated magnetisation flux ($\hat{\Phi}_{dc}$).

10. A method according to any preceding claim, wherein the current control includes:

   calculating a corrective current ($\Delta I_s$) from the DC component of the estimated magnetisation flux ($\hat{\Phi}_{dc}$);
   providing a reference current ($I_{s\_ref}$); and
   calculating the total current ( $I_s^*$ ) to be injected into the transformer (10) from the corrective current ($\Delta I_s$) and the reference current ($I_{s\_ref}$).

11. A controller (20, 30) adapted to control a power converter to inject a DC current component into a transformer (10) according to the method of any preceding claim.

12. An electric circuit including a power converter for an electric rail network, an output stage of the power converter comprising a transformer (10) connected to the power converter, and a controller (20, 30), the controller (20, 30) configured to:

derive an estimated magnetisation flux ($\hat{\Phi}$) of the transformer (10) using a closed-loop estimator comprising:

a modelled magnetisation flux (22), wherein the output of the modelled magnetisation flux (22) is an open-loop estimate of the magnetisation flux ($\Phi_m$) of the transformer (10) obtained from a magnetisation curve adapted to the transformer (10) and an estimate of a magnetisation current ($I_m$) of the transformer (10), and
a flux model (21) comprising a dynamic model of the magnetisation flux of the transformer (10), wherein the output of the flux model (21) is the estimated magnetisation flux ($\hat{\Phi}$) of the transformer (10) and wherein the inputs of the flux model (21) are a measured secondary current ($I_s$), a measured converter voltage ($U_s$), and an input ($\Delta\Phi$) derived from the difference between the output of the flux model (21) and the output of the modelled magnetisation flux (22);

calculate a DC component of the estimated magnetisation flux ($\hat{\Phi}_{dc}$); and
control the power converter to inject a DC current component into the transformer (10), wherein the DC current component is calculated from the DC component of the estimated magnetisation flux ($\hat{\Phi}_{dc}$).

13. An electric rail network comprising the electric circuit according to claim 12 and an overhead line connected to the transformer (10).

**Patentansprüche**

1. Verfahren zur aktiven Flusssteuerung für eine Ausgangsstufe eines Leistungswandlers für ein elektrisches Schienennetz, wobei die Ausgangsstufe einen Transformator (10) mit dem Leistungswandler verbunden umfasst, wobei das Verfahren die folgenden Schritte umfasst:

Ableiten eines geschätzten Magnetisierungsflusses ($\hat{\Phi}$) des Transformators (10) unter Verwendung eines Schätzers mit geschlossener Schleife, umfassend:

einen modellierten Magnetisierungsfluss (22), wobei der Ausgang des modellierten Magnetisierungsflusses (22) eine Schätzung mit offener Schleife des Magnetisie-

rungsflusses ($\Phi_m$) des Transformators (10), der von einer Magnetisierungskurve erhalten wird, die an den Transformator (10) angepasst ist, und eine Schätzung eines Magnetisierungsstroms ($I_m$) des Transformators (10) ist, und
ein Flussmodell (21), das ein dynamisches Modell des Magnetisierungsflusses des Transformators (10) umfasst, wobei der Ausgang des Flussmodells (21) der geschätzte Magnetisierungsfluss ($\hat{\Phi}$) des Transformators (10) ist und wobei die Eingänge des Flussmodells (21) ein gemessener sekundärer Strom ($I_s$), eine gemessene Wandlerspannung ($U_s$) und ein von der Differenz zwischen dem Ausgang des Flussmodells (21) und dem Ausgang des modellierten Magnetisierungsfluss (22) abgeleiteter Eingang ($\Delta\Phi$) sind;

Berechnen einer Gleichstrom-DC-Komponente des geschätzten Magnetisierungsflusses ($\hat{\Phi}_{dc}$) des Transformators (10); und
Durchführen von Stromsteuerung, indem eine DC-Stromkomponente in den Transformator (10) gespeist wird, wobei die DC-Stromkomponente aus der DC-Komponente des geschätzten Magnetisierungsflusses ($\hat{\Phi}_{dc}$) des Transformators (10) berechnet wird.

2. Verfahren nach Anspruch 1, wobei die Ausgangsstufe weiter ein Filter (11) umfasst und die Schätzung des Magnetisierungsflusses ($I_m$) aus einem gemessenen primären Strom ($I_p$), einem sekundären Strom ($I_s$) und einem Filterstrom ($I_f$) berechnet wird.

3. Verfahren nach einem vorstehenden Anspruch, wobei die DC-Komponente des geschätzten Magnetisierungsflusses ($\hat{\Phi}_{dc}$) unter Verwendung eines verstellbaren Durchschnittsfilters (23) über N Proben geschätzt wird.

4. Verfahren nach einem vorstehenden Anspruch, weiter umfassend Verwenden einer Aktivierungsfunktion, die die Stromsteuerung aktiviert, wenn die DC-Komponente des geschätzten Magnetisierungsflusses ($\hat{\Phi}_{dc}$) über einem ersten Schwellenwert ist, und nachfolgendes Deaktivieren der Stromsteuerung, wenn die DC-Komponente des geschätzten Magnetisierungsflusses ($\hat{\Phi}_{dc}$) gleich oder unter einem zweiten Schwellenwert ist, wobei der zweite Schwellenwert niedriger als der erste Schwellenwert ist.

5. Verfahren nach Anspruch 4, wobei der erste Schwellenwert zwischen 20% Sättigung und 90% Sättigung des Transformators (10) ist.

6. Verfahren nach Anspruch 4 oder Anspruch 5, wobei der zweite Schwellenwert zwischen 10% Sättigung und 80% Sättigung des Transformators (10) ist.

7. Verfahren nach einem der Ansprüche 4 bis 6, wobei der erste Schwellenwert um zumindest 5% der Sättigung des Transformators (10) größer als der zweite Schwellenwert ist.

8. Verfahren nach Anspruch 4, wobei der erste Schwellenwert 50% Sättigung des Transformators (10) ist und der zweite Schwellenwert 40% Sättigung des Transformators (10) ist; oder wobei der erste Schwellenwert 60% Sättigung des Transformators (10) ist und der zweite Schwellenwert 50% Sättigung des Transformators (10) ist.

9. Verfahren nach einem vorstehenden Anspruch, weiter umfassend Verwenden eines verstellbaren Steuereinheit (24), um die Magnitude und/oder Dauer der DC-Stromkomponente zu steuern, wobei die verstellbare Steuereinheit (24) auf die DC-Komponente des geschätzten Magnetisierungsflusses ($\hat{\Phi}_{dc}$) wirkt.

10. Verfahren nach einem vorstehenden Anspruch, wobei die Stromsteuerung Folgendes beinhaltet:

Berechnen eines korrigierenden Stroms ($\Delta I_S$) aus der DC-Komponente des geschätzten Magnetisierungsflusses ($\hat{\Phi}_{dc}$); Bereitstellen eines Referenzstroms ($I_{s\_ref}$); und Berechnen des gesamten Stroms ($I_s^*$), der in den Transformator (10) von dem korrigierenden Strom ($\Delta IS$) und dem Referenzstrom ($I_{s\_ref}$) einzuspeisen ist.

11. Steuereinheit (20, 30), die dazu angepasst ist, einen Stromwandler zu steuern, eine DC-Stromkomponente in einen Transformator (10) gemäß dem Verfahren nach einem vorstehenden Anspruch einzuspeisen.

12. Elektrische Schaltung, die einen Leistungswandler für ein elektrisches Schienennetz, eine Ausgangsstufe des Leistungswandlers, die einen mit dem Leistungswandler verbundenen Transformator (10) umfasst, und eine Steuereinheit (20, 30) beinhaltet, wobei die Steuereinheit (20, 30) für Folgendes konfiguriert ist:

Ableiten eines geschätzten Magnetisierungsflusses ($\hat{\Phi}$) des Transformators (10) unter Verwendung eines Schätzers mit geschlossener Schleife, umfassend:

einen modellierten Magnetisierungsfluss (22), wobei der Ausgang des modellierten Magnetisierungsflusses (22) eine Schätzung mit offener Schleife des Magnetisierungsflusses ($\Phi_m$) des Transformators (10), der von einer Magnetisierungskurve erhalten wird, die an den Transformator (10) angepasst ist, und eine Schätzung eines Magnetisierungsstroms ($I_m$) des Transformators (10) ist, und ein Flussmodell (21), das ein dynamisches Modell des Magnetisierungsflusses des Transformators (10) umfasst, wobei der Ausgang des Flussmodells (21) der geschätzte Magnetisierungsfluss ($\hat{\Phi}$) des Transformators (10) ist und wobei die Eingänge des Flussmodells (21) ein gemessener sekundärer Strom ($I_s$), eine gemessene Wandlerspannung ($U_s$) und ein von dem Unterschied zwischen dem Ausgang des Flussmodells (21) und dem Ausgang des modellierten Magnetisierungsflusses (22) abgeleiteter Eingang ($\Delta\Phi$) sind;

Berechnen einer DC-Komponente des geschätzten Magnetisierungsflusses ($\hat{\Phi}_{dc}$); und Steuern des Leistungswandlers, um eine DC-Stromkomponente in den Transformator (10) einzuspeisen, wobei die DC-Stromkomponente aus der DC-Komponente des geschätzten Magnetisierungsflusses ($\hat{\Phi}_{dc}$) berechnet wird.

13. Elektrisches Schienennetz, das die elektrische Schaltung nach Anspruch 12 und eine mit dem Transformator (10) verbundene Freileitung umfasst.

**Revendications**

1. Procédé de commande de flux actif pour un étage de sortie d'un convertisseur de puissance pour un réseau ferroviaire électrique, l'étage de sortie comprenant un transformateur (10) connecté au convertisseur de puissance, le procédé comprenant les étapes consistant à :

dériver un flux de magnétisation estimé ($\hat{\Phi}$) du transformateur (10) à l'aide d'un estimateur en boucle fermée comprenant :

un flux de magnétisation modélisé (22), dans lequel la sortie du flux de magnétisation modélisé (22) est une estimation en boucle ouverte du flux de magnétisation ($\Phi_m$) du transformateur (10) obtenue à partir d'une courbe de magnétisation adaptée au transformateur (10) et d'une estimation d'un courant de magnétisation ($I_m$) du transformateur (10), et un modèle de flux (21) comprenant un modèle dynamique du flux de magnétisation du transformateur (10), dans lequel la sortie du modèle de flux (21) est le flux de magnétisation estimé ($\hat{\Phi}$) du transformateur (10) et dans lequel les entrées du modèle de flux (21) sont un courant secondaire mesuré ($I_s$), une tension de convertisseur mesurée ($U_s$) et une entrée dérivée ($\Delta\Phi$) de la différence entre la sortie du modèle de flux (21) et la sortie du flux de magnétisation modélisé (22) ;

calculer une composante DC de courant continu du flux de magnétisation estimé ($\hat{\Phi}_{dc}$) du transformateur (10) ; et
effectuer une commande de courant en injectant une composante de courant DC dans le transformateur (10), dans lequel la composante de courant DC est calculée à partir de la composante DC du flux de magnétisation estimé ($\hat{\Phi}_{dc}$) du transformateur (10).

2. Procédé selon la revendication 1, dans lequel l'étage de sortie comprend en outre un filtre (11) et l'estimation du courant de magnétisation ($I_m$) est calculée à partir d'un courant primaire mesuré ($I_p$), d'un courant secondaire ($I_s$) et d'un courant de filtre ($I_f$).

3. Procédé selon une quelconque revendication précédente, dans lequel la composante DC du flux de magnétisation estimé ($\hat{\Phi}_{dc}$) est estimée en utilisant un filtre à moyenne mobile (23) sur N échantillons.

4. Procédé selon une quelconque revendication précédente, comprenant en outre une utilisation d'une fonction d'activation qui active la commande de courant lorsque la composante DC du flux de magnétisation estimé ($\hat{\Phi}_{dc}$) est supérieure à une première valeur de seuil et désactive ensuite la commande de courant lorsque la composante DC du flux de magnétisation estimé ($\hat{\Phi}_{dc}$) est égale ou inférieure à une seconde valeur de seuil, dans lequel la seconde valeur de seuil est inférieure à la première valeur de seuil.

5. Procédé selon la revendication 4, dans lequel la première valeur de seuil est comprise entre 20 % de saturation et 90 % de saturation du transformateur (10).

6. Procédé selon la revendication 4 ou la revendication 5, dans lequel la seconde valeur de seuil est comprise entre 10 % de saturation et 80 % de saturation du transformateur (10).

7. Procédé selon l'une quelconque des revendications 4 à 6, dans lequel la première valeur de seuil est supérieure à la seconde valeur de seuil d'au moins 5 % de la saturation du transformateur (10).

8. Procédé selon la revendication 4, dans lequel la première valeur de seuil est 50 % de saturation du transformateur (10) et la seconde valeur de seuil est 40 % de saturation du transformateur (10) ; ou
dans lequel la première valeur de seuil est 60 % de saturation du transformateur (10) et la seconde valeur de seuil est 50 % de saturation du transformateur (10).

9. Procédé selon une quelconque revendication précédente, comprenant en outre une utilisation d'un dispositif de commande accordable (24) pour commander l'amplitude et/ou la durée de la composante de courant DC, ledit dispositif de commande accordable (24) agissant sur la composante DC du flux de magnétisation estimé ($\hat{\Phi}_{dc}$).

10. Procédé selon une quelconque revendication précédente, dans lequel la commande de courant inclut les étapes consistant à :
calculer un courant de correction ($\Delta I_S$) à partir de la composante DC du flux de magnétisation estimé ($\hat{\Phi}_{dc}$) ;

fournir un courant de référence ($I_{s\_ref}$) ; et
calculer le courant total ($I_s^*$) à injecter dans le transformateur (10) à partir du courant de correction (AIS) et du courant de référence ($I_{s\_ref}$).

11. Dispositif de commande (20, 30) adapté pour commander un convertisseur de puissance afin d'injecter une composante de courant DC dans un transformateur (10) selon le procédé d'une quelconque revendication précédente.

12. Circuit électrique incluant un convertisseur de puissance pour un réseau ferroviaire électrique, un étage de sortie du convertisseur de puissance comprenant un transformateur (10) connecté au convertisseur de puissance, et un dispositif de commande (20, 30), le dispositif de commande (20, 30) étant configuré pour :

dériver un flux de magnétisation estimé ($\hat{\Phi}$) du transformateur (10) à l'aide d'un estimateur en boucle fermée comprenant :

un flux de magnétisation modélisé (22), dans lequel la sortie du flux de magnétisation modélisé (22) est une estimation en boucle ouverte du flux de magnétisation ($\Phi_m$) du transformateur (10) obtenue à partir d'une courbe de magnétisation adaptée au transformateur (10) et d'une estimation d'un courant de magnétisation ($I_m$) du transformateur (10), et
un modèle de flux (21) comprenant un modèle dynamique du flux de magnétisation du transformateur (10), dans lequel la sortie du modèle de flux (21) est le flux de magnétisation estimé ($\hat{\Phi}$) du transformateur (10) et dans lequel les entrées du modèle de flux (21) sont un courant secondaire mesuré ($I_s$), une tension de convertisseur mesurée ($U_s$) et une entrée ($\Delta\Phi$) dérivée de la différence entre la sortie du modèle de flux (21) et la sortie du flux de magnétisation modélisé (22) ;

calculer une composante DC du flux de magnétisation estimé ($\hat{\Phi}_{dc}$) ; et commander le convertisseur de puissance pour injecter une composante de courant DC dans le transformateur (10), dans lequel la composante de courant DC est calculée à partir de la composante DC du flux de magnétisation estimé ($\hat{\Phi}_{dc}$).

13. Réseau ferroviaire électrique comprenant le circuit électrique selon la revendication 12 et une ligne aérienne connectée au transformateur (10).

FIG. 1

FIG. 2

FIG. 3

FIG. 4

FIG. 5

EP 3 734 822 B1

FIG. 6

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017093012 A
- US 2013265805 A1